# EUROPEAN PATENT SPECIFICATION

(11) **EP 1 665 065 B1**
(45) Date of publication and mention of the grant of the patent: **03.10.2007**
(21) Application number: 04769834.5
(22) Date of filing: 20.08.2004
(51) Int. Cl.: G06F 15/173, H04L 12/56, G06F 15/80

(54) **INTEGRATED DATA PROCESSING CIRCUIT WITH A PLURALITY OF PROGRAMMABLE PROCESSORS**
INTEGRIERTE DATENVERARBEITUNGSSCHALTUNG MIT MEHREREN PROGRAMMIERBAREN PROZESSOREN
CIRCUIT INTEGRE DE TRAITEMENT DE DONNEES AYANT UNE PLURALITE DE PROCESSEURS PROGRAMMABLES

(30) Priority: 09.09.2003 EP 03103322
(43) Date of publication of application: 07.06.2006
(73) Proprietor: Koninklijke Philips Electronics N.V., 5621 BA Eindhoven (NL)
(72) Inventor: LINDWER, Menno. M., NL-5656 AA Eindhoven (NL); VAN DALEN, Edwin, J., NL-5656 AA Eindhoven (NL)
(74) Representative: Hatzmann, Martin
(86) International application number: PCT/IB2004/051510
(87) International publication number: WO 2005/024644

(56) References cited:
- PANDE P P, GRECU C, IVANOV A, SALEH R: "High-Throughput Switch-Based Interconnect for Future SoCs" PROCEEDINGS OF THE 3RD IEEE INTERNATIONAL WORKSHOP ON SYSTEM-ON-CHIP FOR REAL-TIME APPLICATIONS, July 2003 (2003-07), XP002320368
- HEATON R A ET AL: "BLITZEN: A VLSI ARRAY PROCESSING CHIP" PROCEEDINGS OF THE CUSTOM INTEGRATED CIRCUITS CONFERENCE. SAN DIEGO, 15 - 18 MAY, 1989, NEW YORK, IEEE, US, vol. CONF. 11, 15 May 1989 (1989-05-15), pages 1211-1215, XP000075629
- PANDE P P, GRECU C, IVANOV A, SALEH R: "Design of a Switch for Network on Chip Applications" CIRCUITS AND SYSTEMS, 2003. ISCAS '03., May 2003 (2003-05), XP002320369
- GUERRIER P ET AL: "A Generic Architecture for On-Chip Packet-Switched Interconnections" NN, 27 March 2000 (2000-03-27), pages 250-256, XP010377472
- BRINKMANN A ET AL: "On-chip interconnects for next generation system-on-chips" ASIC/SOC CONFERENCE, 2002. 15TH ANNUAL IEEE INTERNATIONAL SEP 25-28, 2002, PISCATAWAY, NJ, USA,IEEE, 25 September 2002 (2002-09-25), pages 211-215, XP010622029 ISBN: 0-7803-7494-0
- ZEFERINO C A ET AL: "A study on communication issues for systems-on-chip" INTEGRATED CIRCUITS AND SYSTEMS DESIGN, 2002. PROCEEDINGS. 15TH SYMPOSIUM ON 9-14, SEPT. 2002, PISCATAWAY, NJ, USA,IEEE, 9 September 2002 (2002-09-09), pages 121-126, XP010621778 ISBN: 0-7695-1807-9
- KOCHTE M: "Packet-Switching Networks on Systems-on-a-Chip" INET, [Online] 12 June 2003 (2003-06-12), XP002320370 Retrieved from the Internet: URL:http://www.ra.informatik.uni-stuttgart .de/~tangyi/noc/noc-packet-switched-networ ks.pdf> [retrieved on 2005-03-08]
- SCHMIDT U ET AL: "DATAWAVE: A SINGLE-CHIP MULTIPROCESSOR FOR VIDEO APPLICATIONS" IEEE MICRO, IEEE INC. NEW YORK, US, vol. 11, no. 3, 1 June 1991 (1991-06-01), pages 22-25,88, XP000237234 ISSN: 0272-1732
- PECHANEK G G ET AL: "MFAST: a single chip highly parallel image processing architecture" PROCEEDINGS OF THE INTERNATIONAL CONFERENCE ON IMAGE PROCESSING. (ICIP). WASHINGTON, OCT. 23 - 26, 1995, LOS ALAMITOS, IEEE COMP. SOC. PRESS, US, vol. VOL. 3, 23 October 1995 (1995-10-23), pages 69-72, XP010196926 ISBN: 0-7803-3122-2
- PARTHA PRATIM PANDE; ET AL: "Switch-based interconnect architecture for future systems on chip" PROCEEDINGS OF THE SPIE, vol. 5117, 19 May 2003 (2003-05-19), pages 228-237, XP007901780 BELLINGHAM, VA, US

## Description

The invention relates to an integrated data processing circuit with a plurality of programmable processors that are arranged in a two-dimensional matrix.

Arrays of parallel processors are known in the art. Potentially, such arrays facilitate high speed parallel execution of processing tasks. In practice, the speed of such arrays has been found to depend on the need for communication between the processors. Various communication architectures have been proposed.

DE 3812823 describes a network of transputers. A transputer (originally manufactured by Inmos) contains a processor and typically four communication channels, via which the processor can be coupled to four neighbors in an array of processors. Communication between processors flows through the channels. When a message has to be communicated between two processors that are not immediate neighbors in the array, the message travels through intermediate computers. The channels also support broadcast messages (intended for all transputers). Transputers can pass broadcast messages, when first received, to al their neighbors.

In practice, use of intermediate transputers for communication between mutually remote transputers has proved too much of a burden. Therefore DE 3812823 describes the use of communication processors, in addition to the transputers, for handling message transmission.

As another example, the Fujitsu AP1 000 parallel computer discloses a plurality of processors that are part of cells that are organized in a matrix (different cells are included on different printed circuit boards). This parallel computer uses a plurality of communication networks, including a so-called T-net for communication between the cells and a B-net for broadcast communication from a host to the cells. Next to the processor each cell contains a routing controller, the T-net links each the routing controllers of a cell to the routing controllers of four neighboring cell. The routing controllers are capable of routing messages between processors. The B-net comprises a number of busses, each coupled to a group of processors and a ring communication structure for communicating to the busses. The host computer is coupled to the ring structure.

Publication entitled "High throughput switch-based interconnect for future SoCs" by Partha Pratim Pande et al. proposes the use of a network-centric approach to integrate intellectual property (IP) blocks in complex system on chips. In the solution the IP blocks are connected according to butterfly fat tree architecture, where the IP blocks are placed in the leaves and switches are placed at the vertices. Throughput degradation problem is addressed by incorporating the concept of virtual channels in the switches of the network.

The publication entitled "Switch-based interconnect architecture for future systems on chip", also by Partha Pratim Pande, discloses a method for implementing multicasting in such a tree-based network-on-chip.

Given the potentially high processing speed it is attractive to use processor arrays in application specific integrated circuits for many different applications. To support such different applications, it desirable to provide design libraries for automated generation of circuit descriptions of processor arrays of arbitrary size. However, the design of the communication structure presents a design bottleneck. The known communication structures are not easily scalable. That is, they are optimal, if at all, only for arrays with a size in a particular range. Communication latency increases when the array is scaled up. This means that for optimal results the communication structure would have to be redesigned dependent on the size of the array. This makes library generated processor arrays either inefficient or hard to design.

Among others it is an object of the invention to provide for efficient processor arrays with a scalable communication structure.

Among others it is an object of the invention to provide for a design generator for automating the generation of circuit designs of efficient processor arrays and their communication structure.

The invention provides for an integrated data processing circuit according to Claim 1. According to the invention, at least two communication structures are used for communication between processors in an array on an integrated circuit. Operand based nearest neighbor communication is used between the processors, so that the processors can pass operands to their neighbors very efficiently, without having to pass addresses as well. In addition, a tree structured communication network is used, with router circuits to pass messages with addresses from a root router circuit to the addressed processors. Each router circuit selects part of the path to the processors through the tree. Thus, for an array of sufficient size there are at least two levels of router circuits in the tree, the routers at each level taking for example a different slice from the address of the message to decide to which router circuits in the next level of the tree the message will be routed. Thus, the matrix can easily be scaled by varying the number of levels of router circuits in the tree structure. Preferably, all router circuits at all levels of the tree have the same predetermined number of outputs to routers or processors at the next level of the tree. This further simplifies automated design.

In an embodiment the tree is a quadtree. In a typical quadtree the matrix of processors is a square matrix of rows and columns, where both the number of rows and the number of columns is the same power of two. At a lowest level of the tree the matrix is divided into an array of squares that each extend over two rows and columns and the router circuits at the lowest level each have connections to the four processors in a respective square. At a next higher level the array of squares is divided into higher level squares of 2x2 squares, the router circuits at this next higher level each having connections to the four router circuits for the square and so on.

In a further embodiment, the tree structure is also used to transmit messages between processors from the array. In this case a message first travels from a processor towards the root router circuit of the tree, until it reaches a router that covers both the source processor and the destination processor, and then back down to the destination processor. In further embodiments arbiter circuits are preferably provided for each router circuit, to handle the case that a message from the root router circuit collides with a message from a processor and/or that messages from multiple processors collide.

These and other objects and advantageous aspects of the invention will be illustrated in the description of the following figures.
- Fig. 1: shows an array of processors
- Fig. 2: shows a tree structure
- Fig. 3: shows a processor
- Fig. 4: shows a router circuit
- Fig. 5: shows a message part of a further router circuit
- Fig. 6: shows a handshake part of a further router circuit

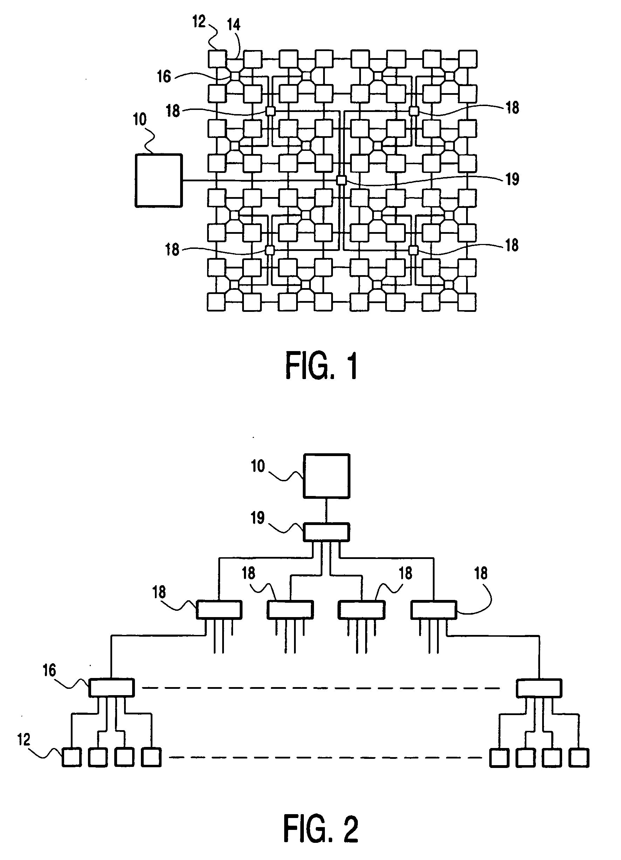

Figure 1 shows a circuit with a host computer 10, an array of processors 12 (only one labelled with a reference numeral for the sake of clarity) and router circuits 16, 18, 19. The processors are connected via nearest neighbor connections 14 (only one labelled with a reference numeral for the sake of clarity). Host computer 10 is connected to processors 12 via router circuits 16, 18, 19 in a tree structure.

Figure 2 shows an organizational view of the tree structure (nearest neighbor connections 14 have been omitted in this figure). The tree structure has several layers of router circuits 16, 18, 19. Host computer 10 is connected to a root router circuit 19, which in turn is connected to four next lower level router circuits 18, which in turn are each connected to four next next level router circuits 16 (only one labelled with a reference numeral for the sake of clarity), which in turn are each connected to four processors 12, which form the leaves at the lowest level of the tree structure.

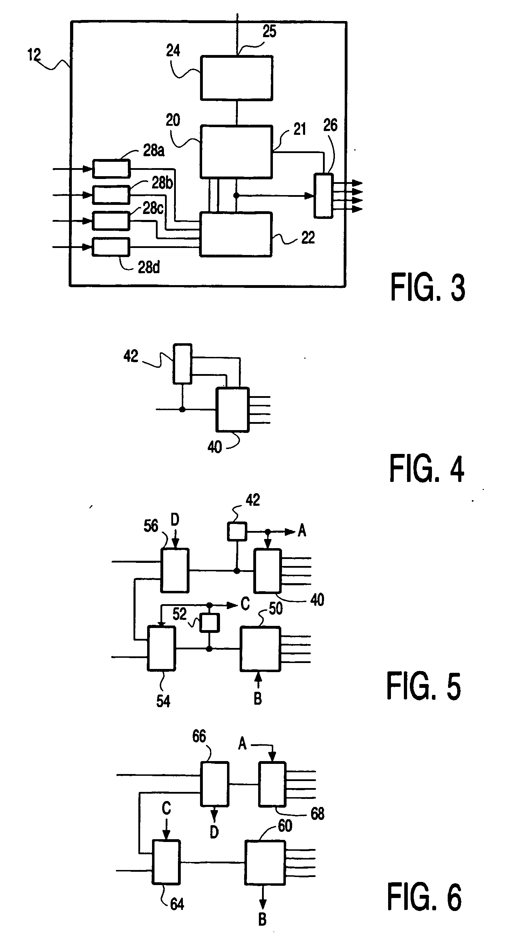

Figure 3 shows an embodiment of a processor 12. The processor contains a processing circuit 20 (which may contain a functional element such as an arithmetic logic unit, an instruction memory, program counter etc.), a register file 22, a memory 24, an output unit 26 and a number of input units 28a-d. Processing circuit 20 has operand read inputs and a result output coupled to register file 22. Inputs of input units 28a-d serve to receive operands from neighboring processors (not shown) and are coupled to register file 22, so that processing circuit 20 can read operands from input units 28a-d. The result output of processing circuit 20 is coupled to output unit 26, together with an output select output 21. The outputs of output unit 26 serve to output operands to respective neighboring processors (not shown). Memory 24 is coupled to processing circuit 20, so that processing circuit 20 can address memory 24 to read or write data to or from memory 24. Memory 24 has an input and output 25 for coupling to one of the router circuits (not shown).

In operation, processor 12 executes a program of instructions. The available instruction set includes an instruction to receive an operand from a selected neighboring processor 12 from input units 28a-d. The instruction set also includes an instruction to output a result to operands to a selected neighboring processor 12 via output unit 26. An example of such an instruction "LOAD A,B", wherein A is a register address of the operand to be passed and B is a virtual register address that identifies the neighbor to which the operand from register A is passed. Such a LOAD instruction can be executed with a conventional fetch, decode, execute, write instruction cycle. It will be appreciated that this type of communication is entirely local: writing to one neighboring processor 12 does not affect any other processor 12.

Router circuits 16, 18, 19 are used to communicate messages from host computer 10 to processors 12. A typical message contains an address A of the processor 12 for which the message is intended, followed by message payload data. The address preferably contains as many bits as necessary to identify individual ones of processors 12. In the case of an array of 64 processors 12, the address preferably contains six bits.

Figure 4 shows an example of a router circuit. The router circuit contains a demultiplexer circuit 40 and a two-bit register 42, for storing the first two bits of the address. Two bit register 42 controls demultiplexer 40, which routes a received message to one of its outputs that is selected by the two bits.

In operation, host computer 10 sends the message to root router circuit 19. Root router circuit 19 extracts the first two bits from the address A of the message and uses these two bits to control selection of a next level router circuit 18 to which root router circuit 19 selectively transmits the message, preferably without the first two bits of the address A.

The selected next level router circuit 18 receives the message and extracts the third and fourth bits of the original address A of the message (the fist two received bits of the address if root router circuit 19 has suppressed the original first two bits of the address A). The selected next level router circuit 18 and uses these two bits to control selection of a next next level router circuit 16 to which next level router circuit 18 selectively transmits the message, preferably without the first two bits of the address A (which originally were the third and fourth bit).

Similarly, the selected lowest level router circuit 16 extracts the fifth and sixth bit from the original address, uses these bits to control selection of one of the processors 12 and transmits the message to the selected processor 12, where the message is used to write data into memory 24 (e.g. in a standard buffer area, or in a location addressed by a further address in the message).

It should be appreciated that the use of the front two bits of the address A at each router circuit 16, 18, 19 and the transmission of the remaining bits is merely an advantageous embodiment, which makes it possible to use uniform router circuits 16, 18, 19, with a minimal need to buffer information. Without deviating from the invention, the router circuits 16, 18, 19 may use other subsets of the bits of the address to control routing. Preferably all router circuits 16, 18, 19 at a particular level use the same bits from the address, but even this is not necessary: as long as host computer 10 provides the appropriate address any processor 12 can be reached. Instead of removing the used bits, all bits may be transmitted, in which case routers at different levels may be programmed to use different bits of the address, or routers may rearrange the bits (e.g. shift the bits and shift bits shifted-out at one end of the message back in at the other end).

In a further embodiment, which supports multicasting, the message is provided with mask bits M, respective mask bits may be provided for each address bit, or for pairs of address bits, or larger groups of address bits. When a mask bit is set, router circuit 16, 18, 19 treats the corresponding address bits as "don't care" and passes the message to all next lower router circuits or processors 12 that are addressed by different values of the address bit. Thus, for example, by providing three mask bits router circuit 16, 18, 19 at each level may be set to broadcast either to a selected lower level router circuit of processor, or to all. For example, with mask bits 011, root router circuit 19 sends the message to a selected router circuit, but all lower level router circuits transmits the message to all lower level circuits, so that sixteen processors are addressed.

It should be appreciated that the systematic architecture shown in figures 1 and 2 is merely given by way of example. It is not necessary that all processors 12 are attached to the same level: in place of any routing circuit a processor may be attached to the tree structure. This may be done for example if the number of processors is not a power of two. In principle processors could be connected to more than one router circuit (the processor having multiple inputs). Thus the processor may have more than one address. Instead of one-to-four router circuits other branch rates could be used (preferably powers of two such as one-to-two or one-to-eight.

Instead of connecting 2x2 blocks of processors to router circuits differently shaped or sized other regions may be used.

In a further embodiment processors 12 are arranged to send further messages up through the router circuits. A further message from a processor 12 contains an address, which can select another processor 12 and/or host computer 10. Basically the router circuit of this embodiment comprises two parts, one for downward transmission of messages (towards processors 12) and one for upward transmission (away from processors 12). In addition a cross connection is provided for passing further messages from the upward part to the downward part. The downward part is mainly similar to that described in the preceding. The upward part of the router circuit is similar to the downward part, except that instead of demultiplexers 40 to distribute messages to lower level router circuits or processors, multiplexers are used to pass further messages from selected ones of the lower level router circuits or processors 12. The cross connection is arranged to check whether a further message that is passed upward addresses a processor that is "served" by the router circuits (i.e. that can be reached by passing a message downward). If so, the further message is fed to the downward part and transmitted as described before. For the further messages the same type of addresses may be used as for downward messages. But in an embodiment addresses relative to the processor are used. For example, if the address of the source contains bits (a0, a1,a2,...) and the address of the destination contains bits (b0, b1, b2, ) then the relative address C of the further message is (a0+b0, a1+b1, a2+b2,..) where "+" denotes the exclusive OR. In this case, it is possible to detect in the router circuit whether the message should cross over from upward to downward transmission by verifying that in the relative address C all address bits for use by higher level router circuit are zero. When the router circuit passes the further message upward it changes those address bits that correspond to selection of the router circuit or processor 12 from which the further message is received.

For example, if a processor 12 with address 010111 transmits a further message to a processor with address 011001, then the relative address C is 001110. Upon receiving the address C the lower level router circuit 16 determines that the first four bits of C are not zero and therefore transmits the further message to the next higher level router circuit 18 after modifying the last two bits, so that the address becomes C'=001101. Next higher level router circuit 18 determines that that the first two bits of C are zero and therefore sends the further message across for downward transmission, after modifying the middle pair of bits C"=001001. The last four bits of this address are now used to control downward routing. In this way the router needs to be adapted only to the level where it is used, but no to the part of the matrix that it serves.

Preferably, an arbitration mechanism is used to ensure that messages don't collide. In principle this is not necessary when the programs of the processors and the host processor are arranged so that no colliding messages can occur. In that case any message may be passed once it is detected (e.g. by transmitting the logic OR of message signals from different sources, and making the message signals logic zero if there is no message).

However, preferably, at least collisions between messages from host computer 10 and from processors 12 are detected and arbitrated, for example by giving priority to messages from host computer 10. This makes it possible to send messages from host computer 10 independent of programs running in the processors. In a further embodiment collisions between messages from processors 12 are arbitrated as well. This makes it possible to run any combination of programs. The arbiter circuits are provided in parallel with the upward and downward paths and the cross-coupling. Any arbitration mechanism may be used, such as for example a conventional request and acknowledge handshake. In this embodiment processor 12 and host computer 10 assert a request signal when a message should be send, arbiters (a) selecting which requests should be answered, (b) transmitting the request towards the destination of the message, (c) receiving an acknowledge of the request from the destination and (d) transmitting the acknowledge back to the source. Of course other known kinds of arbitration structures may be used, such as daisy-chained arbitration, or such as used in the 12C bus etc.

Figure 5 and 6 show parts of an embodiment of a router circuit that uses request and acknowledge handshakes. Basically Figure 5 shows the message part of the router circuit and Figure 6 shows the handshake part. Both parts have similar structure, with two parallel paths, one from above to below and one from below to above, as well as a cross over between the two paths.

Figure 5 includes the components shown in figure 4: demultiplexer 40 and two-bit register 42. The selection signal from two-bit register 42 is indicated by A. In addition figure 5 shows a first multiplexer 50 for multiplexing messages "from below", from lower level router circuits or processors. An address detector 52, detects whether the address of a message from below addresses a processor in the region served by the router circuit, and if so generates a signal C to cause the message to cross-over. A second demultiplexer 54 for passing messages from below either to a second multiplexer 56 or to a higher level router circuit under control of a signal D. Second multiplexer 56 multiplexes messages received "from above" from a higher level router circuit or a central processor to demultiplexer 40 and two-bit register 42.

Figure 6 shows the handshake part of the router circuit. This part contains a first bandshake multiplexing circuit 60 that has handshake interfaces to processors and router circuits "below". Handshake multiplexing circuit 60 arbits between outstanding requests if necessary, acknowledges the winning request, generates a follow on request and signals, on a signal line B which request has won. The signal line B controls the input form which a message is passed by first multiplexer 50 of figure 5. A request demultiplexer 64 is controlled by the cross-over selection signal C of figure 5 and passes the follow on request either to a router circuit "above" or crosses it over to a second handshake demultiplexing circuit 66 (it will be understood that the follow on request may be generated with a delay, to permit the address of the message to be analysed to generate the signal C).

Second handshake demultiplexing circuit 66 arbits between outstanding cross over requests and requests from above if necessary, acknowledges the winning request, generates a further follow on request and signals, on a signal line D which request has won. The signal D controls second multiplexer 56. The further follow on request is passed to a second handshake demultiplexer 68, which passes the further follow on request to the handshake input for handshakes "from above" of a selected router circuit, selected by the signal A from two-bit register 42 (again the further follow on request may be generated with a delay to allow for generation of the signal C from the message). Multiplexer 64 and demultiplexers 60, 68 pass request and acknowledge signals in mutually opposite direction via the selected handshake connections. These handshake circuits 60, 66, 68 are known per se.

By now it will be realized that the invention provides for a highly regular structure that can easily be scaled during automatic generation of an integrated circuit layout. In the design phase the size of the matrix of processors is selected dependent on the application. The processors are placed and neighboring processors are connected. The number of levels in the tree structure is selected dependent on the number of processors (optionally dependent on the maximum of the width and length of the matrix). Router circuits are added for each level and connected to router circuits at lower and higher levels, or to the processors 12 or host computer 10. If the router circuits remove or rearrange the address bits, so that the relevant bits are always at the same position in the message the router circuit need not even be adapted according to the level at which it is used.

## Claims

1. An integrated data processing circuit comprising:
- programmable processors (12) arranged in a two-dimensional matrix, each processor (12) having private operand transfer connections to its neighboring processors (12) in the matrix;
- a communication structure comprising router circuits (16, 18, 19) hierarchically coupled to each other and to the processors in a tree structure, the processors (12) forming leave nodes of the tree structure, the router circuits (16, 18, 19) being arranged to route a message with an address from a root router (19) circuit to an addressed processor (12), selectively via a path through the tree structure, the router circuits (16, 18, 19) each selecting a part of the path under control of the address, wherein the address contains a plurality of bits and the message is provided with mask bits which are provided respectively for each address bit, or for pairs of address bits, or for larger groups of address bits, and, wherein the router circuits (16, 18, 19) are so arranged as, when a mask bit is set, to pass the message to all next lower router circuits or processors (12) that are addressed by different values of the corresponding address bit.

2. An integrated data processing circuit according to Claim 1, the processors (12) each supporting a command to transfer an operand of said command via a selected one of the private operand transfer connections.

3. A data processing circuit according to Claim 1, wherein the address contains a plurality ofbits, each router circuit (16, 18, 19) being arranged to select a slice of the bits, the router circuits (16, 18, 19) controlling routing to direct successor router (16, 18, 19) circuits and/or processors in the tree structure dependent on the bits in the slice only, successive router circuits (16, 18, 19) along each path from the root router (19) circuit to a respective processor each selecting a different slice.

4. A data processing circuit according to Claim 1, wherein each particular router circuit (16, 18, 19) is associated with a region in the matrix, which contain those of the processors (12) that are coupled directly or indirectly to the particular router circuit (16, 18, 19) through the tree structure, a hierarchically higher region associated with any hierarchically higher router circuit (18,19) being divided into spatially separate successor regions of hierarchically lower router circuits (16, 18) directly connected to the hierarchically higher router circuit (18, 19).

5. A data processing circuit according to Claim 4, wherein the tree structure forms a quadtree, each router circuit being coupled to four hierarchically lower router circuits (16, 18) and/or processors (12), dividing the higher region into four quadrants associated with respective ones of the four hierarchically lower router circuits (16, 18) and/or processors.

6. A data processing circuit according to Claim 5, wherein the address contains a plurality of bits, each router circuit being arranged to select a slice of two of the bits, the router circuits controlling routing to direct successor router circuits (16, 18) and/or processors (12) in the tree structure dependent on the bits in the slice only, successive router circuits along each path from the root router circuit (19) to a respective processor (12) each selecting a different slice.

7. A data processing circuit according to Claim 1, wherein the router circuits (16, 18, 19) are furthermore arranged to route a further message with a further address of a particular first one of the processors (12) from a particular second one of the processors (12), via a first sub-path through the tree structure in a first direction towards the root router circuit (19), until the further message reaches a router circuit (1,6, 18, 19) that serves the addressed first one of the processors, subsequently crossing over to transmission via a second sub-path through the tree structure towards the first one of the processors (12), the router circuits (16, 18, 19) selecting the first and second sub-path under control of the further address.

8. A data processing circuit according to Claim 7, the data processing circuit comprising arbiter circuits (60, 66), each associated with a respective one of the router circuits (16,18, 19), arranged to arbitrate a collision between the message from the root router (19) circuit and the further message upon cross over.

9. A data processing circuit according to Claim 8, wherein the arbiter circuits (60, 66) are arranged to arbitrate a collision between the further messages from different ones of the processors.

10. A data processing circuit according to Claim 1, comprising a common control unit, arranged to send a parameter for use in processing to a selected one of the processors (12) in the message.

11. A method of manufacturing an integrated circuit, the method comprising:
- selecting dimensions of a two dimensional matrix of processors (12);
- generating instructions to layout the processors (12) in the matrix with a design computer;
- generating instructions to layout private operand transfer connections between pairs of neighboring processors (12) in the matrix with the design computer;
- automatically generating instructions with the design computer to layout router circuits (16, 18, 19) hierarchically coupled to each other and to the processors (12) in a tree structure, the processors (12) forming leave nodes of the tree structure, the router circuits (16, 18, 19) being arranged to route a message with an address from a root router circuit (19) to an addressed processor (12), selectively via a path through the tree structure, the router circuits (16, 18, 19) each selecting a part of the path under control of the address, the design computer selecting a number of levels of router circuits (16, 18, 19) in the tree structure, wherein the address contains a plurality of bits and the message is provided with mask bits which are provided respectively for each address bit, or for pairs of address bits, or for larger groups of address bits, and, wherein the router circuits (16, 18, 19) are so arranged as, when a mask bit is set, to pass the message to all next lower router circuits or processors (12) that are addressed by different values of the corresponding address bit;
- manufacturing the integrated circuit according to the generated layout.

## Patentansprüche

1. Integrierte Datenverarbeitungsschaltung, die Folgendes umfasst:
- programmierbare Prozessoren (12), die in einer zweidimensionalen Matrix angeordnet sind, wobei jeder Prozessor (12) private Operandenübertragungsverbindungen zu seinen benachbarten Prozessoren (12) in der Matrix hat;
- eine Kommunikationsstruktur mit Routerschaltungen (16, 18, 19), die hierarchisch in einer Baumstruktur miteinander und mit den Prozessoren verbunden sind, wobei die Prozessoren (12) Blätterknoten der Baumstruktur bilden, wobei die Routerschaltungen (16, 18, 19) dafür eingerichtet sind, eine Nachricht mit einer Adresse selektiv über einen Pfad durch die Baumstruktur von einer Wurzel-Routerschaltung (19) an einen adressierten Prozessor (12) weiterzuleiten, wobei die Routerschaltungen (16, 18, 19) jeweils einen Teil des Pfads unter der Steuerung der Adresse auswählen, wobei die Adresse eine Vielzahl von Bits enthält und die Nachricht mit Maskenbits bereitgestellt wird, die für jedes Adressbit, für Adressbit-Paare bzw. für größere Adressbit-Gruppen vorgesehen sind, und wobei die Routerschaltungen (16, 18, 19) dafür eingerichtet sind, die Nachricht, wenn ein Maskenbit gesetzt ist, an alle nächstniedrigeren Routerschaltungen oder Prozessoren (12) weiterzuleiten, die durch verschiedene Werte des entsprechenden Adressbits adressiert werden.

2. Integrierte Datenverarbeitungsschaltung nach Anspruch 1, wobei die Prozessoren (12) jeweils einen Befehl zum Übertragen eines Operanden des genannten Befehls über eine ausgewählte der privaten Operandenübertragungsverbindungen unterstützen.

3. Datenverarbeitungsschaltung nach Anspruch 1, wobei die Adresse eine Vielzahl von Bits enthält, wobei jede Routerschaltung (16, 18, 19) dafür eingerichtet ist, einen Abschnitt der Bits auszuwählen, wobei die Routerschaltungen (16, 18, 19) die Weiterleitung an direkt nachfolgende Routerschaltungen (16, 18, 19) und/oder Prozessoren in der Baumstruktur abhängig nur von den Bits in dem Abschnitt steuern, und wobei nachfolgende Routerschaltungen (16, 18, 19) auf jedem Pfad von der Wurzel-Routerschaltung (19) zu einem betreffenden Prozessor jeweils einen unterschiedlichen Abschnitt auswählen.

4. Datenverarbeitungsschaltung nach Anspruch 1, wobei jede spezielle Routerschaltung (16, 18, 19) zu einer Region in der Matrix gehört, die diejenigen der Prozessoren (12) enthält, die über die Baumstruktur direkt oder indirekt mit der speziellen Routerschaltung (16, 18, 19) verbunden sind, wobei eine hierarchisch höhere Region, die zu einer beliebigen hierarchisch höheren Routerschaltung (18, 19) gehört, in räumlich separate Folgeregionen von hierarchisch niedrigeren Routerschaltungen (16, 18) unterteilt ist, die direkt mit der hierarchisch höheren Routerschaltung (18, 91) verbunden sind.

5. Datenverarbeitungsschaltung nach Anspruch 4, wobei die Baumstruktur einen Quadtree bildet, wobei jede Routerschaltung mit vier hierarchisch niedrigeren Routerschaltungen (16, 18) und/oder Prozessoren (12) verbunden ist und wobei die höhere Region in vier Quadranten aufgeteilt wird, die zu entsprechenden der vier hierarchisch niedrigen Routerschaltungen (16, 18) und/oder Prozessoren gehören.

6. Datenverarbeitungsschaltung nach Anspruch 5, wobei die Adresse eine Vielzahl von Bits enthält, wobei jede Routerschaltung dafür eingerichtet ist, einen Abschnitt von zwei der Bits auszuwählen, wobei die Routerschaltungen die Weiterleitung an direkte Folge-Routerschaltungen (16, 18) und/oder Prozessoren (12) in der Baumstruktur abhängig nur von den Bits in dem Abschnitt steuern und wobei nachfolgende Routerschaltungen auf jedem Pfad von der Wurzel-Routerschaltung (19) zu einem betreffenden Prozessor (12) jeweils einen unterschiedlichen Abschnitt wählen.

7. Datenverarbeitungsschaltung nach Anspruch 1, wobei die Routerschaltungen (16, 18, 19) weiterhin dafür eingerichtet sind, eine weitere Nachricht mit einer weiteren Adresse eines speziellen ersten der Prozessoren (12) von einem speziellen zweiten der Prozessoren (12) über einen ersten Teilpfad durch die Baumstruktur in einer ersten Richtung zur Wurzel-Routerschaltung (19) weiterzuleiten, bis die weitere Nachricht eine Routerschaltung (16, 18, 19) erreicht, die den adressierten ersten der Prozessoren bedient, anschließend zur Übertragung über einen zweiten Teilpfad durch die Baumstruktur zu dem ersten der Prozessoren (12) übergeht, und die Routerschaltungen (16, 18, 19) den ersten und den zweiten Teilpfad unter der Steuerung der weiteren Adresse auswählen.

8. Datenverarbeitungsschaltung nach Anspruch 7, wobei die Datenverarbeitungsschaltung Arbitrierschaltungen (60, 66) enthält, die jeweils zu einer betreffenden der Routerschaltungen (16, 18, 19) gehören und dafür eingerichtet sind, eine Kollision zwischen der Nachricht von der Wurzel-Routerschaltung (19) und der weiteren Nachricht beim Übergang zu arbitrieren.

9. Datenverarbeitungsschaltung nach Anspruch 8, wobei die Arbitrierschaltungen (60, 66) dafür eingerichtet sind, eine Kollision zwischen den weiteren Nachrichten von verschiedenen der Prozessoren zu arbitrieren.

10. Datenverarbeitungsschaltung nach Anspruch 1, mit einer gemeinsamen Steuereinheit, die dafür eingerichtet ist, in der Nachricht einen Parameter zur Verwendung bei der Verarbeitung an einen der Prozessoren (12) zu senden.

11. Verfahren zur Herstellung einer integrierten Schaltung, wobei das Verfahren Folgendes umfasst:
- Auswählen von Abmessungen einer zweidimensionalen Matrix aus Prozessoren (12);
- Erzeugen von Befehlen zur Anordnung der Prozessoren (12) in der Matrix mit einem Entwurfscomputer;
- Erzeugen von Befehlen zur Anordnung privater Operandenübertragungsverbindungen zwischen Paaren aus benachbarten Prozessoren (12) in der Matrix mit dem Entwurfscomputer;
- automatisches Erzeugen von Befehlen mit dem Entwurfscomputer zur Anordnung von Routerschaltungen (16, 18, 19), die in einer Baumstruktur hierarchisch miteinander und mit den Prozessoren (12) verbunden sind, wobei die Prozessoren (12) Blätterknoten der Baumstruktur bilden, wobei die Routerschaltungen (16, 18, 19) dafür eingerichtet sind, eine Nachricht mit einer Adresse selektiv über einen Pfad durch die Baumstruktur von einer Wurzel-Routerschaltung (19) an einen adressierten Prozessor (12) weiterzuleiten, wobei die Routerschaltungen (16, 18, 19) jeweils einen Teil des Pfads unter der Steuerung der Adresse auswählen, wobei der Entwurfscomputer eine Anzahl von Ebenen von Routerschaltungen (16, 18, 19) in der Baumstruktur auswählt, wobei die Adresse eine Vielzahl von Bits enthält und die Nachricht mit Maskenbits bereitgestellt wird, die für jedes Adressbit, für Adressbit-Paare bzw. für größere Adressbit-Gruppen vorgesehen sind, und wobei die Routerschaltungen (16, 18, 19) dafür eingerichtet sind, die Nachricht, wenn ein Maskenbit gesetzt ist, an alle nächstniedrigeren Routerschaltungen oder Prozessoren (12) weiterzuleiten, die durch verschiedene Werte des entsprechenden Adressbits adressiert werden;
- Herstellen der integrierten Schaltung entsprechend dem erzeugten Layout.

## Revendications

1. Circuit intégré de traitement de données comprenant:
- des processeurs programmables (12) disposés en une matrice bidimensionnelle, chaque processeur (12) comportant des connexions de transfert d'opérandes privés vers ses processeurs voisins (12) dans la matrice,
- une structure de communication comprenant des circuits routeurs (16, 18, 19) couplés hiérarchiquement l'un à l'autre ainsi qu'aux processeurs dans une structure arborescente, les processeurs (12) formant des noeuds de feuilles de la structure arborescente, les circuits routeurs (16, 18, 19) étant agencés pour acheminer un message avec une adresse depuis un circuit routeur de départ (19) vers un processeur (12) adressé, sélectivement par le biais d'un chemin traversant la structure arborescente, les circuits routeurs (16, 18, 19) sélectionnant chacun une partie du chemin sous la commande de l'adresse, dans lequel l'adresse contient une pluralité de bits et le message est pourvu de bits de masquage qui sont prévus respectivement pour chaque bit d'adresse, ou pour des paires de bits d'adresse, ou pour de plus grands groupes de bits d'adresse, et dans lequel les circuits routeurs (16, 18, 19) sont agencés de manière que, lorsqu'un bit de masquage est positionné, le message passe à tous les circuits routeurs ou processeurs (12) inférieurs suivants qui sont adressés par différentes valeurs du bit d'adresse correspondant.

2. Circuit intégré de traitement de données suivant la revendication 1, les processeurs (12) accueillant chacun une commande pour transférer un opérande de ladite commande par le biais d'une connexion sélectionnée parmi les connexions de transfert d'opérandes privés.

3. Circuit de traitement de données suivant la revendication 1, dans lequel l'adresse contient une pluralité de bits, chaque circuit routeur (16, 18, 19) étant agencé pour sélectionner une tranche des bits, les circuits routeurs (16, 18, 19) commandant l'acheminement vers des circuits routeurs (16, 18, 19) de succession directe et/ou processeurs dans la structure arborescente en fonction des bits de la tranche uniquement, des circuits routeurs successifs (16, 18, 19) le long de chaque chemin allant du circuit routeur de départ (19) à un processeur respectif sélectionnant chacun une tranche différente.

4. Circuit de traitement de données suivant la revendication 1, dans lequel chaque circuit routeur (16, 18, 19) particulier est associé à une région dans la matrice, qui contient ceux des processeurs (12) qui sont couplés directement ou indirectement au circuit routeur particulier (16, 18, 19) par le biais de la structure arborescente, une région hiérarchiquement supérieure associée à n'importe quel circuit routeur hiérarchiquement supérieur (18, 19) étant divisée en des régions de succession séparées dans l'espace de circuits routeurs hiérarchiquement inférieurs (16, 18), directement connectés aux circuits routeurs hiérarchiquement supérieurs (18, 19).

5. Circuit de traitement de données suivant la revendication 4, dans lequel la structure arborescente forme un tétra-arbre, chaque circuit routeur étant couplé à quatre circuits routeurs (16, 18) et/ou processeurs (12) hiérarchiquement inférieurs, divisant la région supérieure en quatre quadrants associés à des circuits routeurs (16, 18) et/ou processeurs respectifs des quatre circuits routeurs et/ou processeurs hiérarchiquement inférieurs.

6. Circuit de traitement de données suivant la revendication 5, dans lequel l'adresse contient une pluralité de bits, chaque circuit routeur étant agencé de manière à sélectionner une tranche de deux des bits, les circuits routeurs commandant l'acheminement à des circuits routeurs de succession directe (16, 18) et/ou aux processeurs (12) dans la structure arborescente en fonction des bits de la tranche uniquement, des circuits routeurs successifs le long de chaque chemin allant du circuit routeur de départ (19) à un processeur respectif (12) sélectionnant chacun une tranche différente.

7. Circuit de traitement de données suivant la revendication 1, dans lequel les circuits routeurs (16, 18, 19) sont en outre agencés pour acheminer un autre message avec une autre adresse d'un premier processeur particulier parmi les processeurs (12) à partir d'un second processeur particulier parmi les processeurs (12) par le biais d'un premier sous-chemin à travers la structure arborescente dans une première direction vers le circuit routeur de départ (19), jusqu'à ce que l'autre message atteigne un circuit routeur (16, 18, 19) qui dessert le premier des processeurs qui est adressé, passant ensuite par croisement à la transmission par le biais d'un second sous-chemin traversant la structure arborescente vers le premier des processeurs (12), les circuits routeurs (16, 18, 19) sélectionnant le premier et le second sous-chemin sous la commande de l'autre adresse.

8. Circuit de traitement de données suivant la revendication 7, le circuit de traitement de données comprenant des circuits d'arbitrage (60, 66) associés chacun à un circuit routeur respectif parmi les circuits routeurs (16, 18, 19), destinés à arbitrer une collision entre le message provenant du circuit routeur de départ (19) et l'autre message lors d'un croisement.

9. Circuit de traitement de données suivant la revendication 8, dans lequel les circuits d'arbitrage (60, 66) sont destinés à arbitrer une collision entre les autres messages provenant de différents processeurs.

10. Circuit de traitement de données suivant la revendication 1, comprenant une unité de commande commune, destinée à envoyer un paramètre à utiliser dans le traitement vers un des processeurs (12) qui a été sélectionné dans le message.

11. Procédé de fabrication d'un circuit intégré, le procédé comprenant:
- la sélection des dimensions d'une matrice bidimensionnelle de processeurs (12);
- la génération d'instructions pour l'agencement des processeurs (12) dans la matrice avec un ordinateur de conception;
- la génération d'instructions pour l'agencement de connexions de transfert d'opérandes privés entre des paires de processeurs voisins (12) dans la matrice avec l'ordinateur de conception;
- la génération automatique d'instructions avec l'ordinateur de conception pour agencer des circuits routeurs (16, 18, 19) couplés hiérarchiquement l'un à l'autre et aux processeurs (12) dans une structure arborescente, les processeurs (12) formant des noeuds terminaux ou feuilles de la structure arborescente, les circuits routeurs (16, 18, 19) étant agencés pour acheminer un message avec une adresse à partir d'un circuit routeur de départ (19) vers un processeur (12) adressé, sélectivement par le biais d'un chemin traversant la structure arborescente, les circuits routeurs (16, 18, 19) sélectionnant chacun une partie du chemin sous la commande de l'adresse, l'ordinateur de conception sélectionnant un certain nombre de niveaux de circuits routeurs (16, 18, 19) dans la structure arborescente, dans lequel l'adresse contient une pluralité de bits et le message est pourvu de bits de masquage qui sont prévus respectivement pour chaque bit d'adresse, ou pour des paires de bits d'adresse, ou pour de plus grands groupes de bits d'adresse, et dans lequel les circuits routeurs (16, 18, 19) sont agencés de manière que, lorsqu'un bit de masquage est positionné, le message soit passé à tous les circuits routeurs ou processeurs (12) inférieurs suivants qui sont adressés par différentes valeurs du bit d'adresse correspondant;
- la fabrication du circuit intégré conformément à l'agencement généré.
